# EUROPEAN PATENT SPECIFICATION

(11) **EP 1 034 588 B1**
(45) Date of publication and mention of the grant of the patent: **18.09.2002**
(21) Application number: 98956827.4
(22) Date of filing: 23.11.1998
(51) Int. Cl.: H02G 3/06

(54) **A DEVICE FOR SECURING A CABLE**
VORRICHTUNG ZUR BEFESTIGUNG EINES KABELS
DISPOSITIF POUR FIXER UN CABLE

(30) Priority: 24.11.1997 DK 133897
(43) Date of publication of application: 13.09.2000
(73) Proprietor: JOHN MEZZALINGUA ASSOC. INC., East Syracuse, NY 13057-0278 (US)
(72) Inventor: JöRGENSEN, Claus, DK-4760 Vordingborg (DK); JöRGENSEN, Anders, DK-4760 Vordingborg (DK)
(74) Representative: Sundien, Thomas
(86) International application number: DK9800513
(87) International publication number: WO99027626

(56) References cited:
- EP-A- 0 469 488
- EP-A- 0 793 323
- GB-A- 2 208 335

## Description

The present invention relates to a device for securing a cable to a fixed installation or to a corresponding cable, as defined in the introductory part of claim 1.

Usually, cables having copper conductors are used in the vast majority of the European countries, and, therefore, to avoid corrosion, connecting devices formed of copper are used, thereby allowing the voltage potential to be kept at a minimum. Typically, the connecting devices are made of brass, i.e. of an alloy consisting of about 60% copper. The alloy serves to impart the necessary strength to the connecting devices. Conventionally, a cable clamp threaded on the cable is screwed on to a threaded socket, leading to a twisting of the cable as the clamp engages the cable.

Attempts have been made to prevent twisting of the cable. US patent no. 5 059 139 describes a fitting for a coaxial cable where a hexagon head formed on the cable clamp is inserted into a hexagon socket. Special care must be exercised to align the hexagon head with the socket, leading to an increase in the time required to connect the two parts.

It is an object of the present invention to provide an improved connecting device of the type mentioned in the opening paragraph, which device allows for a correct and unobstructed engagement of the engagement means formed on the cable clamp with the engagement means formed on one of the bushings forming the device, when the two bushings of the device are screwed together, and which device prevents a twisting of the cable. This object is achieved by the invention as defined in the characterising clause of claim 1.

By forming the complementary faces on clamping bushing and on the socket-like bushing in the manner defined in claim 2, a highly reliable guiding of the clamping bushing is achieved.

It is preferred to construct the clamping bushing as a substantially cylindrical body with a central axis, a first end which is formed with engagement means, and a second end with gripping teeth which may be caused to engage the cable in said active position. To cause the gripping teeth to engage the cable, an inner face part is preferably adapted to cooperate with the clamping bushing. The inner face part may advantageously be formed as a conical face.

To allow for a simple assembly of the bushings, the first bushing is preferably provided with internal threads, while the second bushing is provided with external threads.

According to a preferred embodiment, the bushings are constructed such that the threaded engagement may be established before the engagement of the engagement means. It is hereby possible, if desired, to establish an initial holding of the bushings, at which time the operator will still be able to rotate the cable to a desired position.

It is preferred in particular that the clamping bushing, the first bushing and the second bushing are made of a relatively hard copper alloy or of copper having a hard surface coating. This prevents failure of the engagement because of deformation of the engagement means.

The invention will be explained more fully below with reference to the drawing which illustrates a preferred embodiment. In the drawing:
fig. 1 is a longitudinal cross-section through the components comprised by the invention,
figs. 2a and 2b are a perspective view of the coupling part and a cross-section through it, respectively, the strain relief part being omitted,
fig. 2c is a view of a detail of fig. 2b,
figs. 3a and 3b are a perspective view of the clamping bushing and a cross-section through it, respectively,
fig. 3c is a view of a detail of fig. 3b,
figs. 4a and 4b show the course in the attachment of the cable to the coupling part, where the connecting bushing as well as the cable are omitted for clarity,
fig. 5 is a cross-section along the line 5-5 in fig. 4b and shows how the engagement of the locking engagement means is established.
fig. 6 shows the situation where the connecting bushing has been screwed completely home on the coupling part, and
figs. 7a and 7b show a preferred strain relief component for use in the invention, seen inserted into the coupling part and in perspective, respectively.

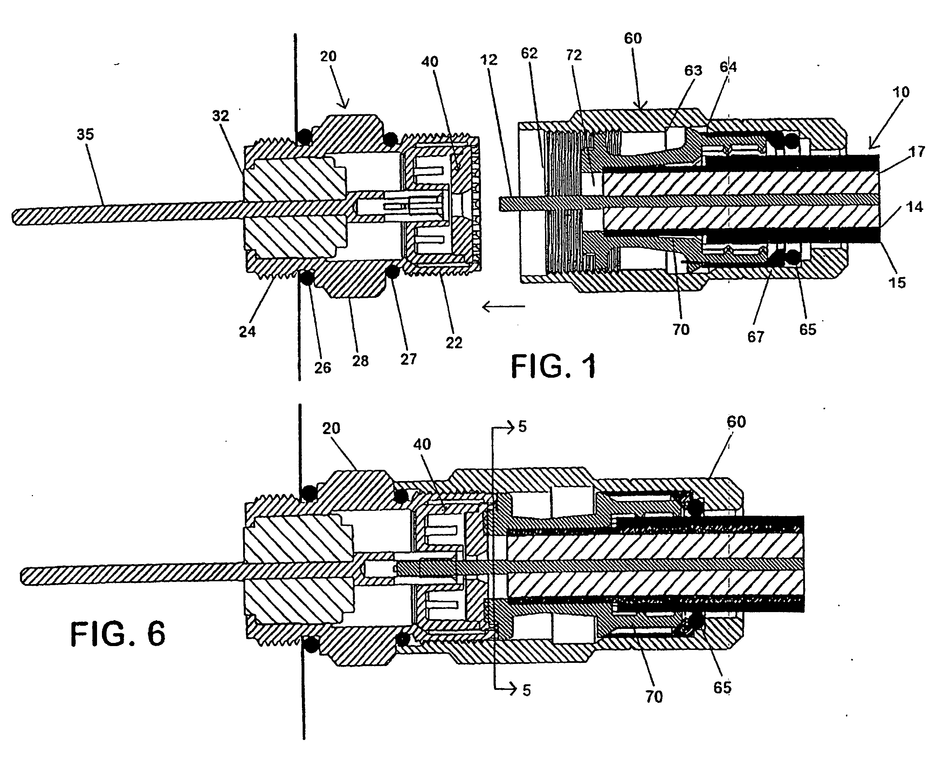

Fig. 1 shows an embodiment of a connecting device according to the invention intended to secure the end of a suitably stripped electrically conductive cable 10 to a fixed coupling part 20, which is e.g. screwed into a cabinet just indicated. The coupling part 20 may alternatively be incorporated in a connector to connect the cable 10 to the end of a corresponding cable.

Prior to the attachment to the coupling part 20, the cable 10 has been moved a certain distance through a connecting bushing 60 having an internal clamping bushing 70, as shown. Conventionally, the cable 10 has a conductor 12, which is insulated from a shield 14 by an intermediate insulation layer 17, and moreover comprises an outer insulation 15. Both the conductor 12 and the shield 14 are preferably made of copper, and the metallic materials incorporated in the connecting bushing 60 and the coupling part 20 are selected in accordance with this, as the selected materials must possess a considerable hardness. The incorporated materials must thus be selected in particular consideration of the impacts to avoid deformations that can reduce the efficiency of the invention. The connecting bushing 60, the clamping bushing 70 and the coupling part 20 may advantageously be formed of a brass alloy having a copper content of e.g. about 60%.

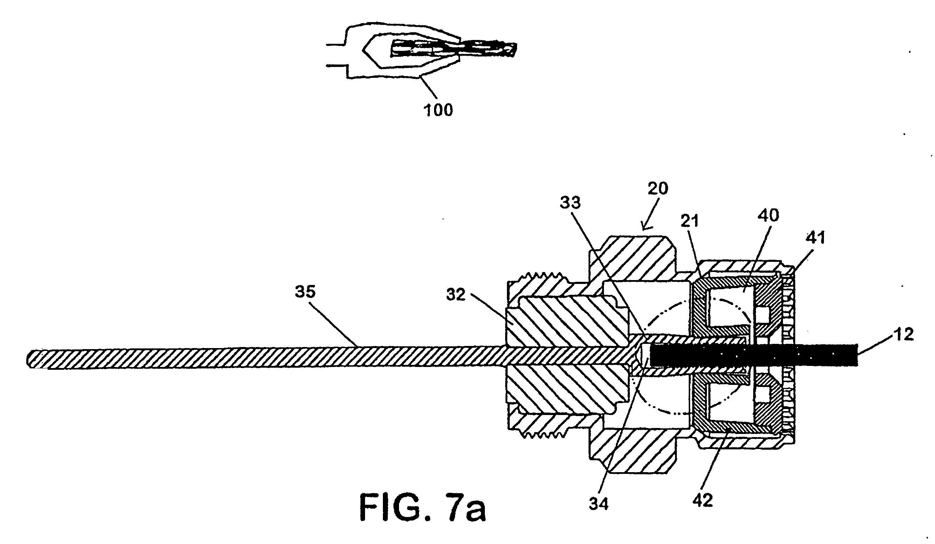

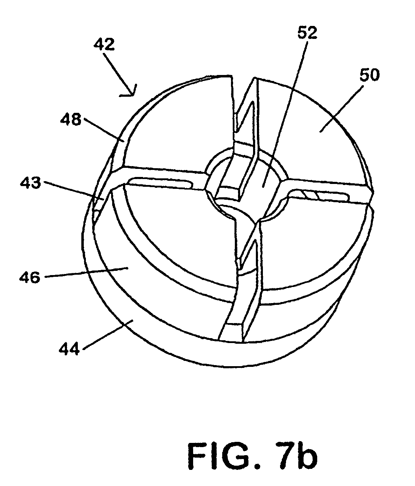

The coupling part 20 is constructed as a cylindrical bushing having a through passageway, said bushing being provided with external threads 22, 24 at its first end and at its second end, respectively. The threads 24 may be used for threadedly securing the coupling part 20 in said cabinet by means of a suitable tool which may e.g. engage a suitably shaped surface part 28 of the coupling part 20. The coupling part 20 is provided with sealing rings 26, 27 preventing ingress of moisture at the termination of the respective threads 22, 24. Further, the interior of the coupling part 20 preferably accommodates an elongate electrically conductive member 35, which, at its one end closest to the first threads 22, has an elongate channel to receive the stripped conductor 12 of the cable 10 during the attachment of the cable. The coupling part 20 furthermore comprises a separate strain relief component 40, which provides clamping of the conductor 12 of the cable 10, and which will be described more fully below together with the conductive member 35 with reference to figs. 7a and 7b.

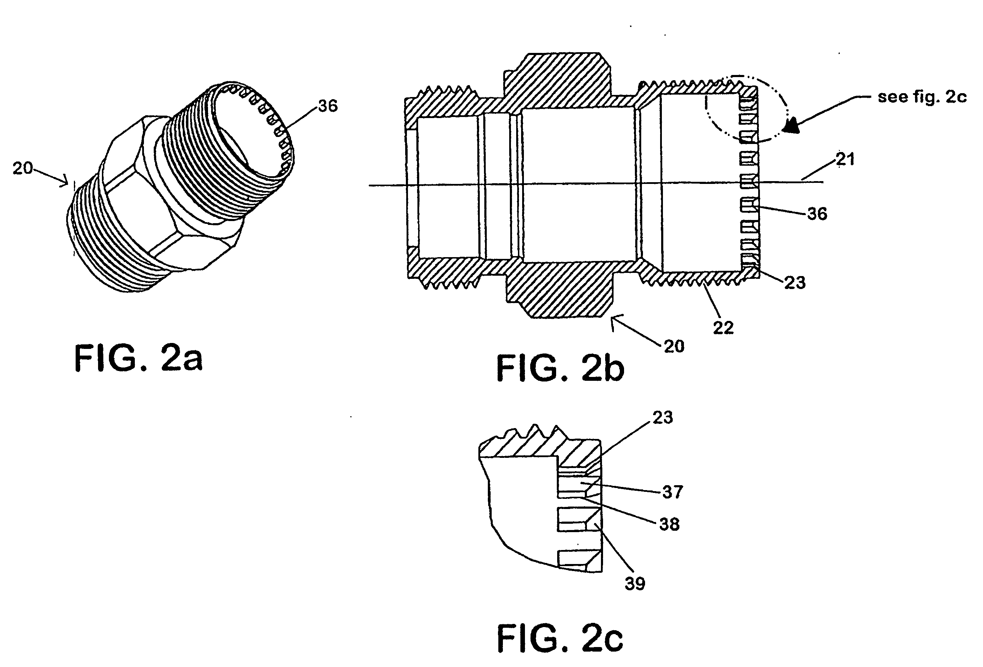

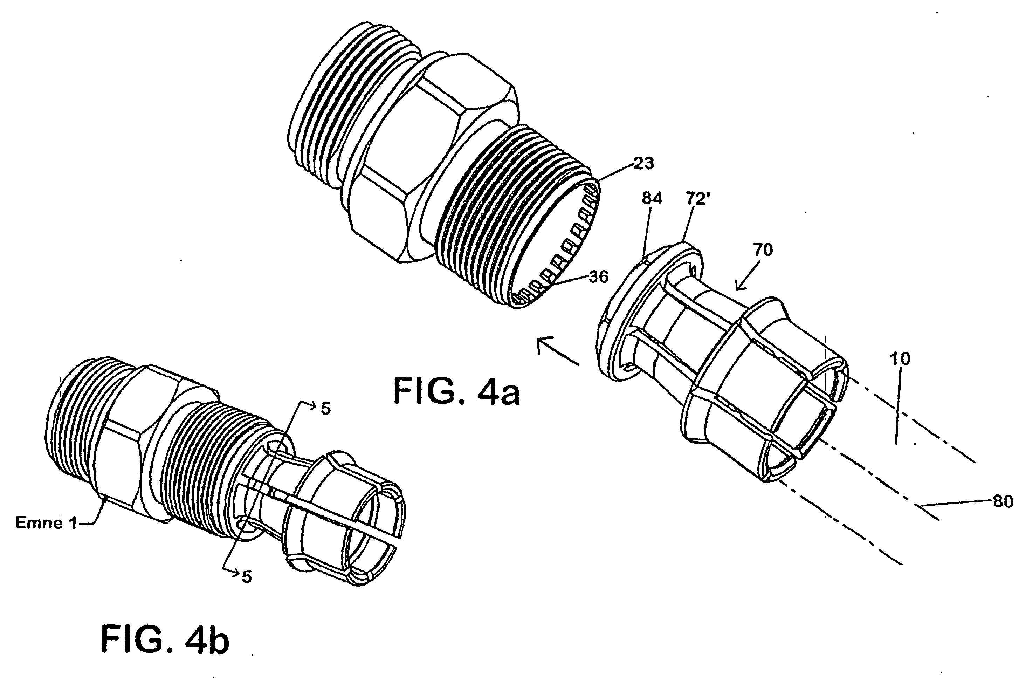

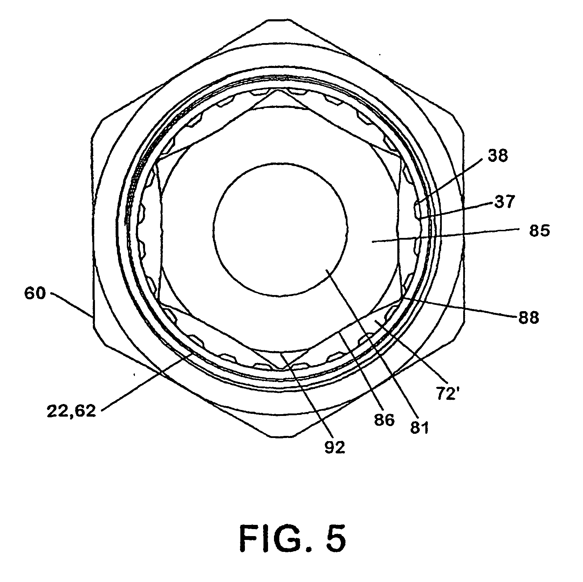

Figs. 2a and 2b are more detailed views of the structure of the right-hand end of the bushing-shaped coupling part 20 which comprises a plurality of specially shaped locking engagement means 36, whose function will be described later with reference to figs. 4 and 5. To the right in fig. 2b, the coupling part 20 is moreover formed with a circular annular edge 23 which forms an engagement face extending perpendicularly to the longitudinal axis 21.

As will be seen particularly from fig. 2c, which is a view of a detail of fig. 2b, the locking engagement means 36 are formed along the inner circumference of the bushing 20 and appear as radially inwardly extending teeth 36 having a leading edge 37 and a trailing edge 38 extending obliquely from the annular inner wall of the bushing 20 at an angle α (see also fig. 5) of between 25° and 45° with respect to a radius of the bushing. The leading edge 37 and the trailing edge 38 extend in parallel with the longitudinal axis 21. In a direction out of the bushing 20, i.e. to the right in fig. 2b, the teeth 36 are moreover defined by an obliquely extending face 39, which extends from the annular edge 23 obliquely into the interior of the bushing 20. The face 39 is preferably inclined at an angle of between 25° and 45° with respect to the plane of the edge 23.

As shown in fig. 1, the connecting bushing 60 is formed with a cylindrical through passageway for the cable 10 and additionally has internal threads 62 at its one end. At its opposite end, the connecting bushing is moreover provided with a sealing ring 65 which is caused to intimately engage the outer face of the cable 10 during the assembly. When the cable 10 is to be connected to the coupling part 20, the threads 62 are caused to threadedly engage the threads 22 of the coupling part 20. The threaded connection may take place using the same tool as is described above, since also the connecting bushing 60 is preferably formed with a tool engagement surface. After the threaded connection, clamping of the cable 10 is established, as described above, thereby preventing the cable from moving longitudinally with respect to the connecting bushing 60.

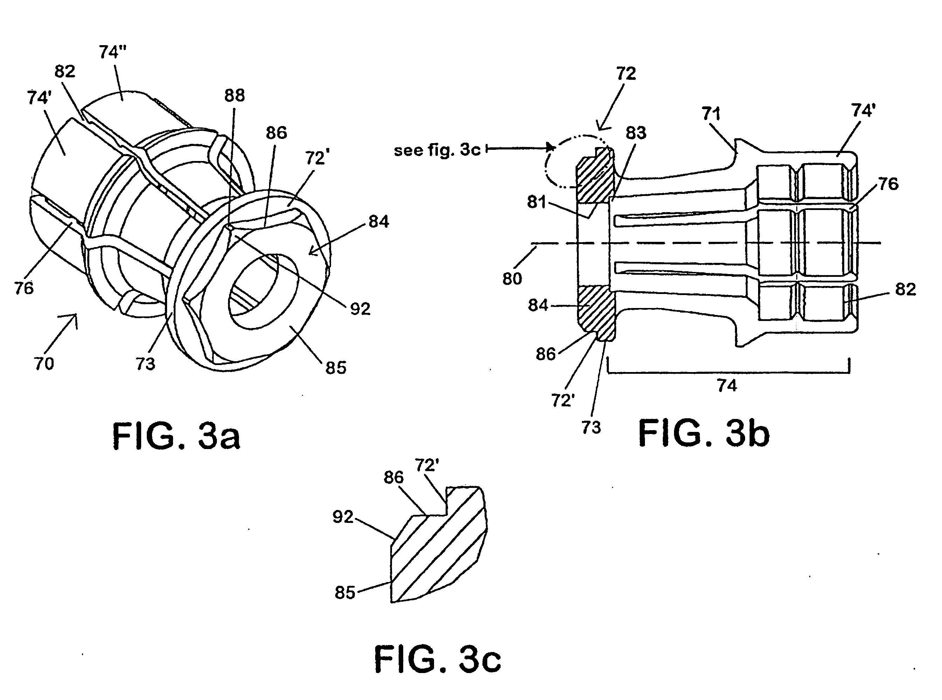

To provide this clamping of the cable 10, the connecting bushing 60 is provided with an internal conical face 67 which cooperates with the clamping bushing 70 through which the cable 10 extends. The conical face 67 may optionally be part of a separate ring embedded in the passageway in the connecting bushing 60. The clamping bushing 70 has a first end 72 which faces the coupling part 20, and a resilient portion which extends to the other end of the clamping bushing 70. The clamping bushing 70 is made as a separate component which will be described more fully immediately below with reference to figs. 3a - 3c, and is loosely mounted in the interior of the connecting bushing 60 so as to be movable between a first, inactive position in which the clamping bushing 70 may optionally engage an annular edge 63 in the connecting bushing 60 and allows passage of the cable 10, and an active position in which the clamping bushing 70 is displaced to the right in fig. 1 with respect to the connecting bushing 60 in a direction toward an additional annular edge 64 in the connecting bushing 60. During this displacement of the clamping bushing 70, the resilient portion of the clamping bushing 70 will cooperate with the conical face 67, which gives rise to compression of the resilient portion around the cable 10. The clamping bushing 70 may moreover be dimensioned so that, in the inactive position, its smallest internal diameter is slightly smaller than the diameter of the cable to provide a modest frictional force on the cable.

Fig. 3a is a perspective view of the clamping bushing 70, the resilient portion being indicated by the reference numeral 74 and extending from the area at the first end 72, as shown in fig. 3b which shows a longitudinal cross-section through the clamping bushing 70. In addition, the clamping bushing 70 comprises an annular external flange 71 which may engage the annular edge 63 of the connecting bushing 60, and which may prevent unintentional extraction of the clamping bushing 70 after its insertion into the connecting bushing 60 and prior to the use. At the first end 72, a ring-shaped section 73 surrounds a circular opening 81 which gives access to the interior of the clamping bushing 70, and which allows passage of the conductor 12 of the cable. The disc-shaped section 73 has an outer engagement face 72' and may moreover comprise an internal stepped formation 83 which the end of the internal insulation 17 of the cable 10 may engage, as shown in fig. 1.

A plurality of parallel cut-outs 76 extend from the area at the first end 72, said cut-outs being distributed over the annular circumference of the clamping bushing 70 and providing the resilience of the portion 74. Thus, these cut-outs 75 define flaps 74', 74"... between them which are anchored at the first end 72, and which may be pressed radially inwards toward the axis of symmetry 80 of the clamping bushing 70 under the action of a correspondingly directed outer force from the above-mentioned conical face 67. The flaps 74', 74"... additionally comprise inwardly directed gripping teeth 82, which are arranged to cut slightly into the outer insulation 15 of the cable 10 when the flaps 74', 74"... are pressed inwards. This provides the above-mentioned clamping of the cable 10, which prevents movements in the longitudinal direction with respect to the clamping bushing 70, the latter being retained against rotation with respect to the connecting bushing 60, as will be explained below.

As shown in figs. 3a - 3c, the first end 72 of the clamping bushing 70 comprises a specially shaped locking engagement portion 84, which is formed integrally with the disc-shaped portion 73, and which, in the embodiment shown, is shaped as an approximately nut-like means that may have six edge sides 86 forming locking engagement means, so that each edge side 86 meets an adjoining edge side 86 at a corner. The corners are not pointed, there being formed small corner faces 88 between the edge sides 86. The locking engagement portion 84 moreover has a plane face 85 which forms the outermost end face of the clamping bushing 70. As will appear from fig. 3a in particular, inclined faces 92 are formed at the corner faces 88, said inclined faces extending from the plane face 85 obliquely inwardly toward the external engagement face 72' of the disc-shaped section 73. The inclined faces 92 preferably form an angle of between 25° and 45° with respect to a line extending transversely to the axis 80. The connecting bushing 60 and the clamping bushing 70 are preferably so dimensioned that the outermost end face 85 in the inactive position of the clamping bushing 70 is positioned in the interior of the connecting bushing 60 to the right of the start of the threads 62, as is illustrated in fig. 1.

Figs. 4a and 4b show the course during the attachment of the cable to the connecting part 20, in which, however, the connecting bushing 60 as well as the cable 10 is left out for clarity. During the assembly, the connecting bushing 60 is moved in the direction of the arrow in fig. 1 until the threads 22 and 62 on the coupling part 20 and the connecting bushing 60, respectively, meet each other. By now rotating the connecting bushing 60 around the axis 80, the connecting bushing 60 and thereby also the clamping bushing 70 are moved further in a direction to the left in fig. 1 when being screwed on to the threads 22. At a given time during this movement, the locking engagement portion 84 extending outwards from the disc-shaped section 73 on the clamping bushing 70 will be caused to lockingly engage the locking engagement means 36 of the coupling part 20, as shown in fig. 4b. This situation is shown more fully in fig. 5 which is a cross-section along the line 5-5 in fig. 4b. The function of the locking engagement is to prevent rotation of the clamping bushing 70 by the subsequent activation of the clamping force of the clamping bushing 70 on the cable 10.

It should be stressed that, under normal circumstances, the compressive force between the end of the clamping bushing 70 and the conical face 67 will give rise to frictional forces which, without the mutual engagement of the locking engagement means 36, 86, would cause the clamping bushing 70 - and thereby the cable 10 - to be rotated together with the connecting bushing 60. Since, normally, the clamping bushing 70 will be formed with an external diameter corresponding to the diameter of the connecting bushing 60, a certain friction will also occur between the adjoining faces in the inactive state of the clamping bushing 70. The establishment of the described locking engagement prevents this detrimental rotation of the cable 10 about the longitudinal axis. It is hereby also possible to ensure a reliable connection between the stripped conductor 12 and the electrically conductive member 35.

Fig. 5 shows in more detail how the locking engagement of the locking engagement means 36, 86 is established. To establish the engagement, where the leading edges 37 of the teeth 36 engage the edges sides 86 of the locking engagement portion 84 at the corners 88, the obliquely extending faces 92 on the locking engagement portion 84 are used together with the obliquely extending face 39 on the teeth 36. Upon joining of the clamping bushing 70 and the coupling part 20, these faces will be pressed against each other for a short time and thereby inevitably give rise to frictional forces between the opposite end of the clamping bushing 70 and the connecting bushing 60, which causes the clamping bushing 70 to be rotated slightly around the axis 80. The play between the threads 22, 62 together with the cooperating inclined faces 92, 39 then makes it possible for the locking engagement means 36, 86 to enter into locking engagement by continued screwing-on of the connecting bushing 60. It is essential in this connection of course that the number of corners 88 in the locking engagement portion 84 is correctly adapted to the number of teeth 36 so that the corners 88 may be moved inwards between the teeth 36. Selection of a relatively large number of teeth 36 just requires a modest rotation of the clamping bushing 70 of e.g. about 2° - 10° max. before the correct engagement is reached. Even though the drawing shows a locking engagement portion with six corners or locking engagement means, a different number of corners may very well be selected. Further, of course, it will also be possible to arrange the teeth 36 of the clamping bushing 70 and the nut-like locking engagement portion 84 on the coupling part 20.

After slight further screwing-on of the connecting bushing 60, the engagement face 72' of the clamping bushing 70 meets the annular edge 23 on the coupling part 20, which prevents the clamping bushing 70 from moving further to the left in fig. 1 by continued screwing-on of the connecting bushing 60. When the connecting bushing 60 is screwed further on, it will thus be moved to the left with respect to the clamping bushing 70, thereby causing the resilient portion 74 of the clamping bushing 70 to cooperate with the conical face 67. The flaps 74', 74"... are hereby pressed further inwards and clamp the cable 10. The completely screwed-on state is shown in fig. 6, from which it also appears how the sealing ring 65 has been pressed into engagement between the end of the connecting bushing 60 and the clamping bushing 70. Simultaneously, an effective strain relief has been established by means of the stain relief component 40, as will be explained more fully below with reference to figs. 7a and 7b.

Fig. 7a shows an example of a strain relief component which may advantageously be used in connection with the present invention, it being also possible, however, to use the principles in connection with other types of cable joints. As will be seen from the figure, the electrically conductive member 35 in the coupling part 20 comprises an elongate channel 34 to receive the end of the stripped conductor 12. The channel 34 is defined by an annular wall 33 which is formed with longitudinal slots corresponding to the slots 76 described in connection with the clamping bushing 70. By affecting the wall 33 with a transverse force, the wall 33 may be caused to clampingly engage the conductor 12. The annular wall 33 is preferably bent inwards at a predetermined point 100, as shown in the detailed view of fig. 7a, in order to achieve a larger electrical contact area between the wall 33 and the conductor 12 when the strain relief component 42 is activated.

This transverse force is provided according to the invention in that the strain relief component 40 cooperates with a conical face 21 formed in the interior of the connecting part 20. The strain relief component 40 is formed by a clamping part 42 and a flat disc-shaped part 41 cooperating with it, both of said parts being preferably made of a plastics material. The clamping part 42 is shown in perspective in fig. 7b from the end which faces the left-hand side in fig 7a. The disc-shaped part 41 engages the clamping part 42 and is supported on its opposite face by inwardly extending projections in the connecting part 20 - in the example shown by the protruding teeth 36.

As will.be seen from fig. 7b in particular, the clamping part 42 is formed with an annular part 44 having an external diameter essentially corresponding to the internal diameter of the connecting part 20. A plurality of curved walls extend from the annular part 44, each of said walls merging into a flat bottom 50 via an inclined edge 48. The bottom 50 is moreover connected with a curved wall 52 intended to engage the wall 33 of the channel 34, and all the curved walls 52 together define a through opening for the wall 33. As will be seen from fig. 7b, the walls 46, the edges 48, the bottoms 50 and the curved walls 52 are separated by spaces 43.

When the connecting bushing 60 is screwed on to the connecting part 20, the outermost end face 85 of the clamping bushing 70 is moved into the interior of the coupling part 20, this movement being stopped when the engagement faces 23, 72' meet, as described above. The disc-shaped part 41, which engages the annular part 44, presses the clamping part 42 to the left in fig. 7a, whereby the curved walls 46 are forced inwards by the conical face 21 so that the diameter of the through opening is reduced. The clamping part 42 is hereby caused to clamp the wall 33 at the transition between the flat bottom 50 and the wall 52. If the location of the bend 100 of the wall 33 is selected to be outside the clamping area of the clamping part, the wall is forced to engage the conductor 12 over a relatively large area, which ensures optimum electrical contact.

## Claims

1. A device for securing a cable (10) to a fixed installation or to a corresponding cable and comprising
- a first threaded bushing (60) adapted to threadedly engage
- a second threaded bushing (20),
- a clamping bushing (70) which has a through passageway for the passage of the cable (10), and which is movably mounted in the interior of the first bushing (60) and adapted to be transferred from a first, inactive position to a second, active position in which the clamping bushing (70) clamps the cable (10) against relative movement,
-- said clamping bushing (70) and said second bushing (20) having complementary engagement means (36, 86) adapted to cooperate to hold the clamping bushing (70) against rotation during the clamping of the cable (10),
--- the engagement means on the clamping bushing (70) being formed by the edge sides (86) of a nut-like portion (84), and the engagement means on the second bushing (20) being formed by the teeth (36) of an interhal, annular toothing,
-- said clamping bushing (70) and said second bushing (20) moreover having engagement faces (23, 72') adapted to transfer compression forces which move the clamping bushing (70) to said second, active position, **characterized in that** the nut-like portion (84) and the teeth are provided with respective and complementary faces (39, 92) to provide unobstructed insertion of said edge sides (86) between said teeth (36).

2. A device according to claim 1, **characterized in that** said complementary faces (39, 92) extend obliquely with respect to said passageway.

3. A device according to claim 1 or 2, **characterized in that** the clamping bushing (70) is constructed as a substantially cylindrical body with a central axis (80), a first end (72) which is formed with engagement means (86), and a second end (74) with gripping teeth (82) which may be caused to engage the cable (10) in said active position.

4. A device according to claim 3, **characterized in that** the first bushing comprises an inner face part (67) adapted to cooperate with the clamping bushing (70) to cause the gripping teeth (82) to engage the cable (10).

5. A device according to any one of the preceding claims, **characterized in that** the first bushing (60) is provided with internal threads (62), and that the second bushing (20) is provided with external threads (22).

6. A device according to any one of the preceding claims, **characterized in**
- **that** the number of teeth (36) is an integer multiple of the number of edge sides (86).

7. A device according to any of the preceding claims, **characterized in that** the first bushing (60) and the second bushing (20) are adapted to be threadedly engaged with each other by means of said threads prior to the engagement of said engagement means (36, 38).

8. A device according to any one of the preceding claims, **characterized in that** the clamping bushing (70), the first bushing (60) and the second bushing (20) are made of a relatively hard copper alloy or of copper having a hard surface coating.

## Patentansprüche

1. Vorrichtung zum Befestigen eines Kabels (10) an einer festen Installation oder an einem entsprechenden Kabel, mit
- einer ersten Gewindebuchse (60), die so beschaffen ist, daß sie in einen Gewindeeingriff gelangen kann mit
- einer zweiten Gewindebuchse (20).
- einer Klemmbuchse (70), die einen Durchlaß für den Durchgang des Kabels (10) besitzt und die innerhalb der ersten Buchse (60) beweglich angebracht und so beschaffen ist, daß sie aus einer ersten, inaktiven Position in eine zweite, aktive Position verlagert werden kann, in der die Klemmbuchse (70) das Kabel (10) gegen eine Relativbewegung festklemmt.
-- wobei die Klemmbuchse (70) und die zweite Buchse (20) komplementäre Eingriffmittel (36, 86) besitzen, die so beschaffen sind, daß sie zusammenwirken, um die Klemmbuchse (70) während des Festklemmens des Kabels (10) drehfest zu halten,
--- wobei die Eingriffmittel an der Klemmbuchse (70) durch die Kantenseiten (86) eines mutternartigen Abschnitts (84) gebildet sind und wobei die Eingriffmittel an der zweiten Buchse (70) durch die Zähne (36) einer ringförmigen Innenzahnung gebildet sind,
-- wobei die Klemmbuchse (70) und die zweite Buchse (20) darüber hinaus Eingriffflächen (23, 72') besitzen, die so beschaffen sind, daß sie Kompressionskräfte übertragen können, die die Klemmbuchse (70) in die zweite, aktive Position bewegen, **dadurch gekennzeichnet, daß** der mutternartige Abschnitt (84) und die Zähne mit jeweiligen und komplementären Flächen (39. 92) versehen sind, die ein unbehindertes Einführen der Kantenseiten (86) zwischen die Zähne (36) ermöglichen.

2. Vorrichtung nach Anspruch 1, **dadurch gekennzeichnet, daß** die komplementären Flächen (39, 92) in bezug auf den Durchlaß schräg verlaufen.

3. Vorrichtung nach Anspruch 1 oder 2, **dadurch gekennzeichnet, daß** die Klemmbuchse (70) als ein im wesentlichen zylindrischer Körper konstruiert ist, der eine Mittelachse (80), ein erstes Ende (72), das mit Eingriffmitteln (86) ausgebildet ist, und ein zweites Ende (74) mit Greifzähnen (82), die dazu veranlaßt werden können, das Kabel (10) in der aktiven Position zu ergreifen. umfaßt.

4. Vorrichtung nach Anspruch 3, **dadurch gekennzeichnet, daß** die erste Buchse einen Innenflächenteil (67) umfaßt, der so beschaffen ist, daß er mit der Klemmbuchse (70) zusammenwirkt, um die Greifzähne (82) zu einem Ergreifen des Kabels (10) zu veranlassen.

5. Vorrichtung nach einem der vorhergehenden Ansprüche, **dadurch gekennzeichnet, daß** die erste Buchse (60) mit Innengewinden (62) versehen ist und daß die zweite Buchse (20) mit Außengewinden (22) versehen ist.

6. Vorrichtung nach einem der vorhergehenden Ansprüche, **dadurch gekennzeichnet,**
- **daß** die Anzahl der Zähne (36) ein ganzzahliges vielfaches der Anzahl der Kantenseiten (86) ist.

7. Vorrichtung nach einem der vorhergehenden Ansprüche, **dadurch gekennzeichnet, daß** die erste Buchse (60) und die zweite Buchse (20) so beschaffen sind, daß sie mittels der Gewinde gegenseitig in einen Gewindeeingriff gelangen können, bevor die Eingriffmittel (36, 38) in Eingriff gelangen.

8. Vorrichtung nach einem der vorhergehenden Ansprüche, **dadurch gekennzeichnet, daß** die Klemmbuchse (70), die erste Buchse (60) und die zweite Buchse (20) aus einer verhältnismäßig harten Kupferlegierung oder aus Kupfer mit einer harten Oberflächenbeschichtung hergestellt sind.

## Revendications

1. Un dispositif pour fixer un câble (10) à une installation fixe ou à un câble correspondant, et comprenant :
- une première douille filetée (60) venant se connecter par vissage à
- une seconde douille filetée (20),
- une douille de serrage (70) qui comporte un passage traversant servant à faire passer le câble (10), qui est montée mobile à l'intérieur de la première douille (60), et qui peut passer d'une première position inactive en une seconde position active dans laquelle ladite douille de serrage (70) serre le câble (10) de façon à empêcher tout mouvement relatif de celui-ci,
ladite douille de serrage (70) et ladite seconde douille (20) comportant des moyens de connexion complémentaires (36, 86) qui entrent en interaction afin de maintenir la douille de serrage (70) et d'empêcher toute rotation de celle-ci lors du serrage du câble (10), tandis que le moyen de connexion de la douille de serrage (70) est formé par les côtés latéraux (86) d'une partie de type écrou (84), et que le moyen de connexion de la seconde douille (20) est formé par les dents (36) d'une dentition interne annulaire,
et ladite douille de serrage (70) et ladite seconde douille (20) comportant en outre des faces de contact (23, 72') permettant de transférer les forces de compression qui font passer la douille de serrage (70) en sa seconde position active,
lequel dispositif se **caractérise en ce que** la partie de type écrou (84) et les dents comportent des faces respectives et complémentaires (39, 92) qui assurent une insertion sans obstruction desdits côtés latéraux (86) entre lesdites dents (36).

2. Un dispositif, selon la revendication 1, qui se **caractérise en ce que** lesdites faces complémentaires (39, 92) sont obliques par rapport au dit passage.

3. Un dispositif, selon l'une ou l'autre des revendications 1 et 2, qui se **caractérise en ce que** la douille de serrage (70) se présente sous forme d'un corps essentiellement cylindrique qui comprend un axe central (80), une première extrémité (72) comportant un moyen de connexion (86), ainsi qu'une seconde extrémité (74) comportant une dent de prise (82) qui peut être amenée en contact avec le câble (10) dans ladite position active.

4. Un dispositif, selon de la revendication 3, qui se **caractérise en ce que** la première douille comprend une partie face interne (67) qui va entrer en interaction avec la douille de serrage (70) de façon à amener la dent de prise (82) en contact avec le câble (10).

5. Un dispositif, selon l'une quelconque des revendications précédentes, qui se **caractérise en ce que** la première douille (60) comporte des filetages internes (62) et **en ce que** la seconde douille (20) comporte des filetages externes (22).

6. Un dispositif, selon l'une quelconque des revendications précédentes, qui se **caractérise en ce que** le nombre de dents (36) est un nombre entier qui est lui-même un multiple du nombre de côtés latéraux (86).

7. Un dispositif, selon l'une quelconque des revendications précédentes, qui se **caractérise en ce que** la première douille (60) et la seconde douille (20) sont conçues pour être connectées l'une à l'autre par vissage par le biais desdits filetages avant la connexion desdits moyens de connexion (36, 38).

8. Un dispositif, selon l'une quelconque des revendications précédentes, qui se **caractérise en ce que** la douille de serrage (70), la première douille (60) et la seconde douille (20) sont faites d'un alliage de cuivre relativement dur ou sont faites de cuivre comportant un revêtement de surface dur.
